(19) **Europäisches Patentamt**
**European Patent Office**
**Office européen des brevets**

(11) **EP 4 722 753 A1**

(12) **EUROPEAN PATENT APPLICATION**

(43) Date of publication:
**08.04.2026 Bulletin 2026/15**

(21) Application number: **24218768.0**

(22) Date of filing: **10.12.2024**

(51) International Patent Classification (IPC):
**G01S 1/08** $^{(2006.01)}$     **G01S 1/04** $^{(2006.01)}$
**G01S 5/02** $^{(2010.01)}$     **H04W 64/00** $^{(2009.01)}$

(52) Cooperative Patent Classification (CPC):
**G01S 1/08; H04B 7/06952;** G01S 1/045;
G01S 5/02; G01S 5/0236; G01S 2201/02;
G01S 2205/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.10.2024 BE 202400065**

(71) Applicant: **Tallinn University of Technology**
**19086 Tallinn (EE)**

(72) Inventor: **Müürsepp, Ivo**
**Tallinn (EE)**

(74) Representative: **Bringer IP**
**9, Avenue Parmentier**
**31200 Toulouse (FR)**

(54) **DOWNLINK ANGLE OF DEPARTURE ESTIMATION**

(57) Downlink (DL)-angle of departure (AoD) positioning for UE in an indoor location includes scanning different beams of a 5G cellular telecommunications gNB and measuring a signal strength of each of the beams. A primary beam with a strongest computed signal strength is selected along with a secondary beam of less measured signal strength. A range of AoD values is then retrieved for each of the primary and secondary beams. Thereafter, a DL-AoD from the gNB to the UE within the indoor location is determined according to a measured difference of beam powers of each of the primary and secondary beams across the angular range of each of the beams. As such, a position in x-y space of the UE may be resolved by utilizing the determined DL-AoD from the gNB to the UE.

FIG. 1

EP 4 722 753 A1

**Description**

BACKGROUND OF THE INVENTION

Field of the Invention

The present invention relates to the technical field of location tracking of user equipment (UE) and more particularly to UE position determination by way of a 5G cellular telecommunications network.

Description of the Related Art

UE location tracking has advanced significantly in recent years, leveraging various technologies and methodologies to improve accuracy and reliability. The current state of the art encompasses a range of approaches, from radio frequency identification (RFID) and Wi-Fi-based positioning systems to more sophisticated techniques involving Bluetooth Low Energy (BLE) beacons, ultra-wideband (UWB) technology, and 4G-based cellular telecommunications systems. RFID technology has long been used for indoor location tracking due to its simplicity and cost-effectiveness. It involves placing tags on objects or people and using RFID readers to detect their presence. While effective in certain applications, RFID has limitations in range and accuracy, making it less suitable for environments requiring precise location data.

Wi-Fi-based positioning systems have also been widely adopted. These systems use the signal strength of Wi-Fi access points to determine the position of a device. Despite the widespread use of Wi-Fi, Wi-Fi systems are often hampered by signal interference and multipath effects, which can degrade accuracy. In comparison to Wi-Wi, BLE beacons represent a significant advancement in indoor positioning. These small devices transmit signals that can be picked up by smartphones or other receivers to determine location. BLE beacons offer improved accuracy compared to Wi-Fi and RFID and are relatively easy to deploy. They are commonly used in retail environments for customer tracking and targeted marketing, as well as in museums and airports for navigation assistance. The main limitation of BLE is its reliance on the density of beacons; higher accuracy requires a greater number of beacons, which can increase costs and complexity.

UWB technology has emerged as one of the more promising solutions for precise indoor location tracking. UWB systems use short pulses of radio waves to determine the distance between devices with a high degree of accuracy, often within a few centimeters. This technology is less susceptible to interference and can penetrate walls and other obstacles more effectively than Wi-Fi or BLE. UWB is increasingly being used in industrial settings for asset tracking and safety applications, as well as in consumer electronics for enhanced user experiences. However, UWB is effective only over short distances, typically up to 30 meters. This limitation makes it unsuitable for applications requiring wide-area coverage.

Fourth generation (4G) mobile technology builds on the capabilities of UWB and have been adapted for in-building location tracking. These systems can utilize the signal strength from 4G cell towers to estimate the position of a device. Although 4G-based location tracking provides broader coverage than UWB, it is generally less accurate due to the limitations of single-beam technology and signal interference within buildings. As an advancement over 4G, fifth generation (5G) mobile technology includes a built-in capacity for accurate mobile positioning.

The Third Generation Partnership Project (3GPP) Radio Access Network (RAN) group in 3GPP Release 16 has provided several different measurements for positioning based upon time-delay mobile positioning similar to that of satellite positioning. In particular, in that in 5G the locations of mobile base stations (gNB) are fixed and known, the gNB are suitable for use as fixed anchor nodes for mobile positioning purposes. Specifically, measuring the time taken for a 5G signals to travel from an anchor node to UE allow for an estimation of distance between those the UE and anchor node. Obtained distance estimates, from multiple base stations, can be then used to calculate the estimate of the physical position of UE.

In 5G, the use of large antenna arrays, consisting of a multiplicity of elements, offers an alternative method for mobile positioning. Specifically, the direction of the arrival of the 5G signal can be estimated with high accuracy when implementing spatial signal processing techniques enabled by the large antenna arrays. In practice some well-known algorithms, like "MUSIC" and "ESPRIT" can be used to obtain accurate estimates of the direction of arrival of a signal. This estimation is performed at the gBN and is known as Uplink Angle of Arrival (UL-AoA). Alternately the angle can be estimated at the UE as a Downlink Angle of Departure (DL-AoD). Even still, as to DL-AoD, the typical mobile terminal does not possess a built-in antenna array and the mobile terminal orientation generally is neither fixed nor known. Consequently, conventional angle estimation methodologies have proven impractical for DL-AoD estimation in order to achieve indoor positioning of UE.

BRIEF SUMMARY OF THE INVENTION

Embodiments of the present invention address technical deficiencies of the art in respect to the indoor positioning of UE. To that end, embodiments of the present invention provide for a novel and non-obvious method for DL-AoD positioning for UE in an indoor location. Embodiments of the present invention also provide for a novel and non-obvious computing device adapted to perform the foregoing method. Finally, embodiments of the present invention provide for a novel and non-obvious data processing system incorporating the foregoing device in order to perform the foregoing method.

In one embodiment of the invention, a method for DL-AoD positioning for UE in an indoor location includes scanning a set of multiple different beams of a 5G cellular telecommunications gNB and measuring a signal strength of each one of the scanned set of multiple different beams. The method additionally includes selecting a primary one of the beams with a strongest measured signal strength and selecting a secondary one of the beams of less measured signal strength. A range of AoD values is then retrieved for each of the primary and the secondary one of the beams. Thereafter, a DL-AoD from the gNB to the UE within the indoor location is determined according to a measured difference of beam powers of each of the primary one of the beams and the secondary one of the beams across the angular range of each of the primary and the secondary one of the beams. As such, a position in x-y space of the UE may be resolved by utilizing the determined DL-AoD from the gNB to the UE.

For estimating the DL-AoD the UE performs beam scanning of the beams of a single gNB. For positioning at least two DL-AoD estimates are required from different gNBs. The scanning result then lists measured beam strengths. From this list of measured beam strengths, the strongest beam is found at first. Next, the strengths of the two neighbors of the found beam are identified and the strongest amongst the two beams is selected. The direction of the strongest, primary beam, $\varphi_1$ is the coarse estimate of the DL-AoD. Also using the signal strength of the secondary beam the estimation accuracy is significantly increased..

In one aspect of the embodiment, the measured difference of beam powers $\Delta P$ is used to estimate DL-AoD as:

$$\hat{\varphi} = \frac{\Delta P \varphi_{3dB}^2 + 12(\varphi_2^2 - \varphi_1^2)}{24(\varphi_2 - \varphi_1)}$$

wherein $\varphi_1$ is the known angle of the primary beam and $\varphi_2$ is the known direction of the secondary beam And the $\varphi_{3dB}$ is 3dB beamwidth of used beams.

In another aspect of the embodiment, the position of the UE is resolved according to a triangulation of the position based upon the determined DL-AoD from the gNB to the UE and at least one additionally determined DL-AoD from a different gNB to the UE.

In yet another aspect of the embodiment, the primary one of the beams and the secondary one of the beams are emitted from the gNB adjacent to one another.

In even yet another aspect of the embodiment, the range of AoD values for the primary one of the beams and the range of AoD values for the secondary one of the beams are retrieved from a table in the UE in which an index of all beams of the gNB are associated with respective AoD ranges of values.

In another embodiment of the invention, a data processing system is adapted for DL-AoD positioning for UE in an indoor location. The system includes a cellular radio frequency transceiver and a cellular baseband communications platform including memory and one or more processing units including one or more processing cores so that the cellular baseband communications platform performs baseband radio communications through the transceiver. The system further includes a host computing platform including memory and one or more processing units including one or more processing cores. Even further, the system includes a single power supply powering both the cellular baseband communications platform and the host computing platform. Finally, the system includes a positioning module. The positioning module includes computer program instructions enabled while executing in the memory of at least one of the processing units of the host computing platform to perform a process of DL-AoD positioning for UE in an indoor location.

Specifically, the program instructions scan a set of multiple different beams of a 5G cellular telecommunications gNB in communication with the cellular baseband communications platform, measure a signal strength of each one of the scanned set of multiple different beams and select a primary one of the beams with a strongest measured signal strength and selecting a secondary one of the beams adjacent to the primary one of the beams. The program instructions then retrieve a range of AoD values for each of the primary and the secondary one of the beams and determine a DL-AoD from the gNB to the UE within the indoor location according to a measured difference of beam powers of each of the primary one of the beams and the secondary one of the beams across the angular range of each of the primary and the secondary one of the beams. Finally, the program instructions resolve a position in x-y space of the UE utilizing the determined DL-AoD from the gNB to the UE.

In this way, the technical deficiencies of the positioning of UE are overcome owing to computation of DL-AoD at the UE based upon the ability to identify at the UE both the signal strength of each beam received from the gNB at the UE and to associate the range of AoD values for each beam. Consequently, a measured difference of beam powers can be determined at the UE of each of the primary one of the beams and the secondary one of the beams across the angular range of each of the primary and the secondary one of the beams. With this determination, the position of the UE can then be triangulated within the indoor environment.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

## BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:

Figure 1 is a pictorial illustration reflecting different aspects of a process of DL-AoD positioning for UE in an indoor location;

Figure 2 is a block diagram depicting a data processing system adapted to perform one of the aspects of the process of Figure 1; and,

Figure 3 is a flow chart illustrating one of the aspects of the process of DL-AoD positioning for UE in an indoor location as shown in Figure 1.

## DETAILED DESCRIPTION OF THE INVENTION

Embodiments of the invention provide for DL-AoD positioning for UE in an indoor location. In accordance with an embodiment of the invention, a position estimation for UE within an indoor setting is determined based upon the triangulation of two different DL-AoD measurements for two or more different gNBs in communication with the UE. Each of the different DL-AoD measurements are measured through a computation of a differential beam power between the beam power of a beam selected amongst a set of beams emanating from a first one of the two different gNBs and having a highest reported signal strength in the set, and the beam power of a beam selected amongst a set of beams emanating from a second one of the two different gNBs and having a highest reported signal strength in the set. In this way, the UE can be positioned within an indoor location without the need to instrument the UE with a built-in antenna array and without the need to know a priori the mobile terminal orientation.

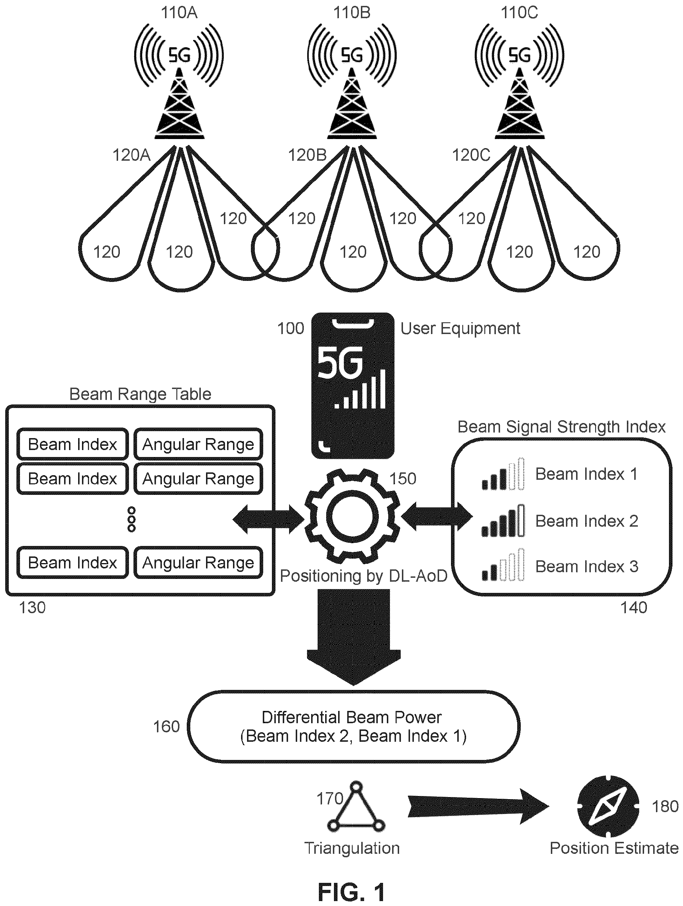

In illustration of one aspect of the embodiment, Figure 1 pictorially shows a process of DL-AoD positioning for UE in an indoor location. As shown in Figure 1, UE 100 establishes a wireless cellular connection to each of different gNBs 120A, 120B, 120C. Each of the gNBs 120A, 120B, 120C emits a set of beams 120 each at a different radial angle from the corresponding one of the eNBs 120A, 120B, 120C. Positioning logic 150 then determines the signal strength of each of the beams 120 of each of the gNBs 120A, 120B, 120C in reference to a beam signal strength index 140 and for each of the gNBs 120A, 120B, 120C, the positioning logic 150 selects a primary one of the beams 120 of a strongest signal strength along with a secondary adjacent one of the beams 120.

A beam range table 130 then provides to the positioning logic 150 an angular range of values for the radial angle of each one of the correspondingly selected primary and secondary one of the beams 120. The positioning logic 150 then computes the DL-AoD 160 for each of the gNBs 120A, 120B, 120C as a function of the difference in beam power for the primary and secondary beams of the corresponding one of the gNBs 120A, 120B, 120C. For instance, the computation of the DL-AoD160 can result from the following mathematical relationship:

$$\hat{\varphi} = \frac{\Delta P \varphi_{3dB}^2 + 12(\varphi_2^2 - \varphi_1^2)}{24(\varphi_2 - \varphi_1)}$$

With the DL-AoD 160 having been computed for each of the gNBs 120A, 120B, 120C, the positioning logic 150 computes the position 180 of the UE 100 through triangulation 170 accounting for the DL-AoD 160 of the gNBs 120A, 120B, 120C and a known distance between each of the gNBs 120A, 120B, 120C.

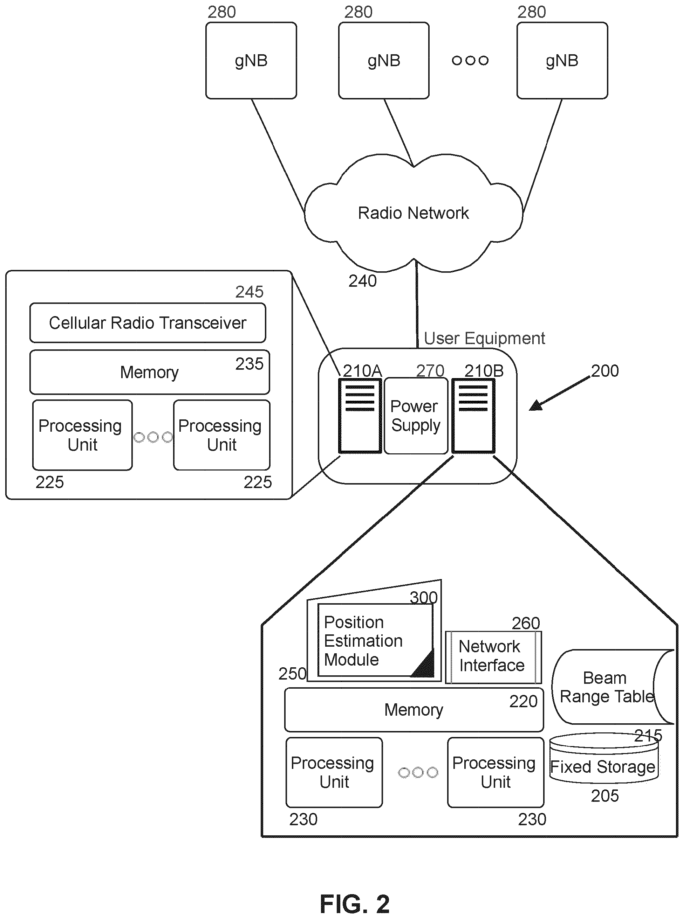

Aspects of the process described in connection with Figure 1 can be implemented within a data processing system. In further illustration, Figure 2 schematically shows a data processing system adapted to perform DL-AoD positioning for UE in an indoor location. In the data processing system illustrated in Figure 1, a cellular baseband communications platform 210A and a host computing platform 210B are powered with UE 200 by a common power supply 270. The cellular baseband communications platform 210A includes memory 235 and one or more processing units 225 including one or more processing cores and performing baseband radio communications through a cellular radio frequency transceiver 245. The host computing platform 200 in turn includes memory 220 and one or more processing units 230, fixed storage 205 and a network interface 260.

The host computing platform 210B of the UE 200 further includes a computing device 250 including a non-transitory computer readable storage medium accessed by the processing units 230. The computing device stores 250 thereon or retains therein a program module 300 that includes computer program instructions which when executed by one or more of the processing units 230, performs a programmatically executable process for DL-AoD positioning for UE in an indoor location. Specifically, the program instructions during execution direct the cellular baseband communications platform 210A to establish cellular communications links over cellular radio communications network 240 to two or more gNBs 280.

The program instructions thereafter, for each corresponding one of the gNBs 280, identifies a primary beam with a beam index amongst a set of beams emanating from the corresponding one of the gNBs 280 having a strongest signal. Thereafter, the program instructions associate in beam range table 215 the beam index for the primary beam with a particular range of angular values at which the primary beam transmits a signal. Concurrently, the program instructions select a secondary one of the beams, for instance a beam adjacent to the primary beam, and correlate in the beam range table 215 a beam index for the secondary beam with a particular range of angular values. Thereafter, the program instructions compute a DL-AoD for the corresponding one of the gNBs 280 according to a differential beam power between the primary and secondary beams. Finally, the program instructions compute a position estimation for the UE 200 as a triangulation of the DL-AoD for two or more of the gNBs 280.

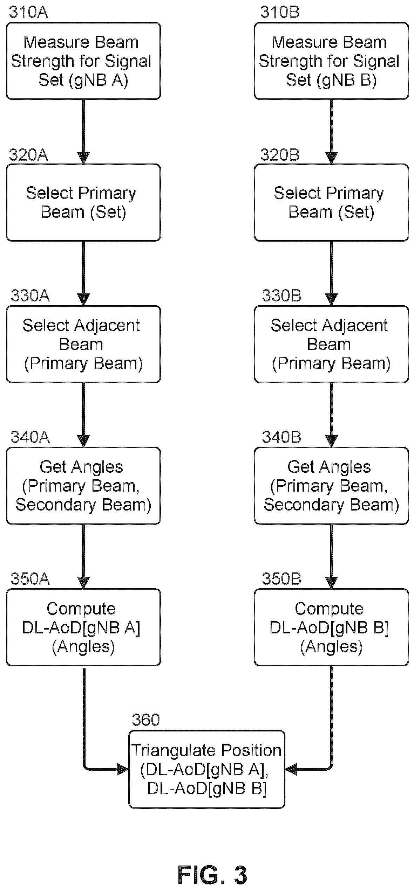

In further illustration of an exemplary operation of the module, Figure 3 is a flow chart illustrating one of the aspects of the process of Figure 1. Beginning in blocks 310A and 310B, in respect to two different gNBs fixed within an indoor location at a known distance apart, a beam signal set of beams is acquired from each of the gNBs. Each beam in each beam signal set emits a signal at a known angular range. In blocks 320A, 320B, for each of the gNBs, a primary beam is selected which has been determined to have been received in the UE at a highest signal strength amongst all of the beams of the corresponding one of the gNBs. Likewise, in blocks 330A, 330B, a secondary beam is selected which is adjacent in position to the primary beam.

In blocks 340A, 340B, the angular range for the primary and secondary beams are then retrieved from a data structure within the UE. Consequently, in block 350, the DL-AoD for the corresponding one of the gNBs is computed according to the different beam power of the primary and secondary beams of the corresponding one of the gNBs. Finally, in block 360, a position estimate for the UE is determined by triangulation accounting for the known distance between the gNBs and each computed DL-AoD of the gNBs.

Of import, the foregoing flowchart and block diagram referred to herein illustrate the architecture, functionality, and operation of possible implementations of systems, methods, and computing devices according to various embodiments of the present invention. In this regard, each block in the flowchart or block diagrams may represent a module, segment, or portion of instructions, which includes one or more executable instructions for implementing the specified logical function or functions. In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

More specifically, the present invention may be embodied as a programmatically executable process. As well, the present invention may be embodied within a computing device upon which programmatic instructions are stored and from which the programmatic instructions are enabled to be loaded into memory of a data processing system and executed therefrom in order to perform the foregoing programmatically executable process. Even further, the present invention may be embodied within a data processing system adapted to load the programmatic instructions from a computing device and to then execute the programmatic instructions in order to perform the foregoing programmatically executable process.

To that end, the computing device is a non-transitory computer readable storage medium or media retaining therein or storing thereon computer readable program instructions. These instructions, when executed from memory by one or more processing units of a data processing system, cause the processing units to perform different programmatic processes exemplary of different aspects of the programmatically executable process. In this regard, the processing units each include an instruction execution device such as a central processing unit or "CPU" of a computer. One or more computers may be included within the data processing system. Of note, while the CPU can be a single core CPU, it will be understood that multiple CPU cores can operate within the CPU and in either instance, the instructions are directly loaded from memory into one or more of the cores of one or more of the CPUs for execution.

Aside from the direct loading of the instructions from memory for execution by one or more cores of a CPU or multiple CPUs, the computer readable program instructions described herein alternatively can be retrieved from over a computer communications network into the memory of a computer of the data processing system for execution therein. As well, only a portion of the program instructions may be retrieved into the memory from over the computer communications network, while other portions may be loaded from persistent storage of the computer. Even further, only a portion of the program instructions may execute by one or more processing cores of one or more CPUs of one of the computers of the data processing system, while other portions may cooperatively execute within a different computer of the data processing system that is either co-located with the computer or positioned remotely from the computer over the computer communications network with results of the computing by both computers shared therebetween.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A method for downlink (DL)-angle of departure (AoD) positioning for user equipment (UE) in an indoor location, comprising:

   scanning a set of multiple different beams of a 5G cellular telecommunications gNB;
   measuring a signal strength of each one of the scanned set of multiple different beams;
   selecting a primary one of the beams with a strongest measured signal strength and selecting a secondary one of the beams of less measured signal strength than the primary one of the beams;
   retrieving a range of AoD values for each of the primary and the secondary one of the beams;
   determining a DL-AoD from the gNB to the UE within the indoor location according to a measured difference of beam powers of each of the primary one of the beams and the secondary one of the beams across the angular range of each of the primary and the secondary one of the beams; and,
   resolving a position in x-y space of the UE utilizing the determined DL-AoD from the gNB to the UE.

2. The method of claim 1, wherein the measured difference of beam powers is measured according to:

$$\hat{\varphi} = \frac{\Delta P \varphi_{3dB}^2 + 12(\varphi_2^2 - \varphi_1^2)}{24(\varphi_2 - \varphi_1)}$$

   wherein $\varphi_1$ is the estimated angle of the primary beam and $\varphi_2$ is the estimated angle of the secondary beam.

3. The method of claim 1, wherein the position of the UE is resolved according to a triangulation of the position based upon the determined DL-AoD from the gNB to the UE and at least one additionally determined DL-AoD from a different gNB to the UE.

4. The method of claim 1, wherein the primary one of the beams and the secondary one of the beams are emitted from the gNB adjacent to one another.

5. The method of claim 1, wherein the range of AoD values for the primary one of the beams and the range of AoD values for the secondary one of the beams are retrieved from a table in the UE in which an index of all beams of the gNB are associated with respective AoD ranges of values.

6. A data processing system adapted for downlink (DL)-angle of departure (AoD) positioning for user equipment (UE) in an indoor location, the system comprising:

   a cellular radio frequency transceiver;
   a cellular baseband communications platform comprising memory and one or more processing units including one or more processing cores and performing baseband radio communications through the transceiver;
   a host computing platform comprising memory and one or more processing units including one or more processing cores;
   a single power supply powering both the cellular baseband communications platform and the host computing platform; and,
   a positioning module comprising computer program instructions enabled while executing in the memory of at least one of the processing units of the host computing platform to perform:

      scanning a set of multiple different beams of a 5G cellular telecommunications gNB in communication with the cellular baseband communications platform;
      measuring a signal strength of each one of the scanned set of multiple different beams;
      selecting a primary one of the beams with a strongest measured signal strength and selecting a secondary one of the beams of less measured signal strength than the primary one of the beams;
      retrieving a range of AoD values for each of the primary and the secondary one of the beams;
      determining a DL-AoD from the gNB to the UE within the indoor location according to a measured difference of beam powers of each of the primary one of the beams and the secondary one of the beams across the angular range of each of the primary and the secondary one of the beams; and, resolving a position in x-y space of the UE utilizing the determined DL-AoD from the gNB to the UE.

7. The system of claim 6, wherein the measured difference of beam powers is measured according to:

$$\hat{\varphi} = \frac{\Delta P \varphi_{3dB}^2 + 12(\varphi_2^2 - \varphi_1^2)}{24(\varphi_2 - \varphi_1)}$$

wherein $\varphi_1$ is the estimated angle of the primary beam and $\varphi_2$ is the estimated angle of the secondary beam.

8. The system of claim 6, wherein the position of the UE is resolved according to a triangulation of the position based upon the determined DL-AoD from the gNB to the UE and at least one additionally determined DL-AoD from a different gNB to the UE.

9. The system of claim 6, wherein the primary one of the beams and the secondary one of the beams are emitted from the gNB adjacent to one another.

10. The system of claim 6, wherein the range of AoD values for the primary one of the beams and the range of AoD values for the secondary one of the beams are retrieved from a table in the UE in which an index of all beams of the gNB are associated with respective AoD ranges of values.

11. A computing device comprising a non-transitory computer readable storage medium having program instructions stored therein, the instructions being executable by at least one processing core of a processing unit to cause the processing unit to perform downlink (DL)-angle of departure (AoD) positioning for user equipment (UE) in an indoor location by:

scanning a set of multiple different beams of a 5G cellular telecommunications gNB; measuring a signal strength of each one of the scanned set of multiple different beams; selecting a primary one of the beams with a strongest measured signal strength and selecting a secondary one of the beams of less measured signal strength than the primary one of the beams; retrieving a range of AoD values for each of the primary and the secondary one of the beams; determining a DL-AoD from the gNB to the UE within the indoor location according to a measured difference of beam powers of each of the primary one of the beams and the secondary one of the beams across the angular range of each of the primary and the secondary one of the beams; and, resolving a position in x-y space of the UE utilizing the determined DL-AoD from the gNB to the UE.

12. The device of claim 11, wherein the measured difference of beam powers is measured according to:

$$\hat{\varphi} = \frac{\Delta P \varphi_{3dB}^2 + 12(\varphi_2^2 - \varphi_1^2)}{24(\varphi_2 - \varphi_1)}$$

wherein $\varphi_1$ is the estimated angle of the primary beam and $\varphi_2$ is the estimated angle of the secondary beam.

13. The device of claim 11, wherein the position of the UE is resolved according to a triangulation of the position based upon the determined DL-AoD from the gNB to the UE and at least one additionally determined DL-AoD from a different gNB to the UE.

14. The device of claim 11, wherein the primary one of the beams and the secondary one of the beams are emitted from the gNB adjacent to one another.

15. The device of claim 11, wherein the range of AoD values for the primary one of the beams and the range of AoD values for the secondary one of the beams are retrieved from a table in the UE in which an index of all beams of the gNB are correlated with respective AoD ranges of values.

FIG. 1

280

gNB

280

gNB

o o o

280

gNB

Radio Network

240

245

Cellular Radio Transceiver

235

Memory

Processing
Unit

o o o

Processing
Unit

225

225

User Equipment

210A  270  210B

Power
Supply

200

300

Position
Estimation
Module

260

Network
Interface

250

Beam
Range Table

Memory

220

215

Processing
Unit

o o o

Processing
Unit

Fixed Storage

230

230

205

## FIG. 2

310A
Measure Beam
Strength for Signal
Set (gNB A)

310B
Measure Beam
Strength for Signal
Set (gNB B)

320A
Select Primary
Beam (Set)

320B
Select Primary
Beam (Set)

330A
Select Adjacent
Beam
(Primary Beam)

330B
Select Adjacent
Beam
(Primary Beam)

340A
Get Angles
(Primary Beam,
Secondary Beam)

340B
Get Angles
(Primary Beam,
Secondary Beam)

350A
Compute
DL-AoD[gNB A]
(Angles)

350B
Compute
DL-AoD[gNB B]
(Angles)

360
Triangulate Position
(DL-AoD[gNB A],
DL-AoD[gNB B]

FIG. 3

Europäisches
Patentamt
European
Patent Office
Office européen
des brevets

# EUROPEAN SEARCH REPORT

**Application Number**

EP 24 21 8768

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/289568 A1 (PAJOVIC MILUTIN [US] ET AL) 19 September 2019 (2019-09-19)<br>* figures 1, 4, 6A, 6B, 7, 9A, 9B, 11 *<br>* paragraphs [0001], [0054], [0059] *<br>* paragraphs [0063] - [0068] *<br>* paragraphs [0078] - [0083] *<br>* paragraphs [0096] - [0109] *<br>----- | 1-15 | INV.<br>G01S1/08<br><br>ADD.<br>G01S1/04<br>G01S5/02<br>H04W64/00 |
| X | US 2020/267684 A1 (HUANG XUAN-CHAO [TW] ET AL) 20 August 2020 (2020-08-20)<br>* figures 1, 2, 7-9 *<br>* paragraphs [0020], [0024] *<br>* paragraphs [0028] - [0034] *<br>----- | 1-15 | |
| A | WO 2024/141840 A1 (NOKIA TECHNOLOGIES OY [FI]) 4 July 2024 (2024-07-04)<br>* figures 1-4, 10 *<br>* paragraphs [0089], [0114] *<br>* paragraphs [0122] - [0124] *<br>----- | 1-15 | |
| A | US 2024/114473 A1 (YERRAMALLI SRINIVAS [US] ET AL) 4 April 2024 (2024-04-04)<br>* figures 6, 7 *<br>* paragraphs [0101] - [0105] *<br>* paragraphs [0120] - [0129] *<br>----- | 1-15 | TECHNICAL FIELDS SEARCHED (IPC)<br><br>G01S<br>H04W |
| A | US 2021/385678 A1 (AKKARAKARAN SONY [US] ET AL) 9 December 2021 (2021-12-09)<br>* figures 3, 4 *<br>* paragraphs [0062] - [0064] *<br>* paragraphs [0070] - [0072] *<br>----- | 1-15 | |

The present search report has been drawn up for all claims

| Place of search | Date of completion of the search | Examiner |
|---|---|---|
| Munich | 24 March 2025 | Krummenacker, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 8768

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2025

| Patent document cited in search report | Publication date | Patent family member(s) | Publication date |
|---|---|---|---|
| US 2019289568 A1 | 19-09-2019 | EP 3571785 A1 | 27-11-2019 |
| | | JP 6910557 B2 | 28-07-2021 |
| | | JP 2021509171 A | 18-03-2021 |
| | | US 2019289568 A1 | 19-09-2019 |
| | | WO 2019181036 A1 | 26-09-2019 |
| US 2020267684 A1 | 20-08-2020 | CN 111837355 A | 27-10-2020 |
| | | TW 202038639 A | 16-10-2020 |
| | | US 2020267684 A1 | 20-08-2020 |
| | | WO 2020164609 A1 | 20-08-2020 |
| WO 2024141840 A1 | 04-07-2024 | NONE | |
| US 2024114473 A1 | 04-04-2024 | BR 112023013837 A2 | 24-10-2023 |
| | | CN 116783841 A | 19-09-2023 |
| | | EP 4282084 A1 | 29-11-2023 |
| | | KR 20230134478 A | 21-09-2023 |
| | | US 2024114473 A1 | 04-04-2024 |
| | | WO 2022159920 A1 | 28-07-2022 |
| US 2021385678 A1 | 09-12-2021 | BR 112022023962 A2 | 07-02-2023 |
| | | CN 115669041 A | 31-01-2023 |
| | | EP 4162723 A1 | 12-04-2023 |
| | | JP 2023529252 A | 10-07-2023 |
| | | KR 20230020971 A | 13-02-2023 |
| | | PH 12022552429 A1 | 03-01-2024 |
| | | TW 202203670 A | 16-01-2022 |
| | | US 2021385678 A1 | 09-12-2021 |
| | | US 2023379736 A1 | 23-11-2023 |
| | | WO 2021247959 A1 | 09-12-2021 |

EPO FORM P0459

For more details about this annex : see Official Journal of the European Patent Office, No. 12/82